**Europäisches Patentamt**

**European Patent Office**

**Office européen des brevets**

(19)

(11) Publication number: **0 022 053**
**A1**

(12)

# EUROPEAN PATENT APPLICATION

(21) Application number: **80630020.8**

(22) Date of filing: **24.06.80**

(51) Int. Cl.³: **A 01 D 43/08**
**A 01 F 29/06**

(30) Priority: **25.06.79 US 51932**

(43) Date of publication of application:
**07.01.81 Bulletin 81'1**

(84) Designated Contracting States:
**DE FR GB**

(71) Applicant: **REXNORD INC.**
**P.O. Box 2022**
**Milwaukee, Wisconsin 53201(US)**

(72) Inventor: **Porter, William B., Jr.**
**11 Captain Brown's Lane**
**Acton Massachusetts 01720(US)**

(72) Inventor: **Lund, Roger A.**
**4 Belleview Boulevard**
**Belleair Florida 33516(US)**

(74) Representative: **Weydert, Robert et al,**
**Office Dennemeyer S.à.r.l. 21-25 Allée Scheffer P.O. Box
41**
**L-Luxembourg(LU)**

(54) Shear bar having notched edge configuration.

(57) A shear bar having a cutting edge (34) created by forming or machining notches (32) along the cutting edge. The notches (32) preferably define triangles, semicircles, or other geometric shapes along the surfaces adjacent to the cutting edge to increase the cutting edge length and restrict transverse movement of a crop across the length of the cutting edge. The cutting edge is hardened and/or enhanced with hard surfacing material (39) to retain a sharp cutting edge and prolong the useful life of the shear bar.

FIG.3

EP 0 022 053 A1

Croydon Printing Company Ltd.

SHEAR BAR HAVING NOTCHED EDGE
CONFIGURATION

This invention relates to stationary knives or shear
bars, and more particularily to shear bars used in forage
harvesters used to cut a variety of crops, such as corn, and
grasses to be used for feed. Generally, as a forage harvester travels through a field, a crop is gathered and fed
into the cutterhead by feed rolls. As the crop enters the
cutterhead, it is cut into relatively small pieces and blown,
or thrown from the forage harvester discharge spout.

The cutting of the crop is accomplished by a scissors-
like action between the stationary knife or shear bar and
typically, several rotating knives located in the cutterhead
of the forage harvester. The rotating knives pass the
cutting edge of the shear bar to provide the necessary
cutting action as the crop is directed over the shear bar
and across its cutting edge.

a crop is cut in this fashion, the edges of the
rotating knives as well as the cutting edge of the shear bar
tend to wear and become dull resulting in the creation of a
relatively large gap between the rotating knife edges and
the shear bar cutting edge. The crop tends to be drawn of
pulled over the shear bar cutting edge resulting in increased wear of the knives, an increase in the power required to turn the rotating knives, and a deterioration of
the quality of cut material.

The angle of the knife relative to the shear bar tends
to move the material transversly across the length of the
shear bar forcing the material against the endshield,
thereby increasing horsepower requirements, and causing the
trailing end of the knife to cut more material and wear disproportionately because the material is not distributed
uniformly along the length of the shear bar.

Shear bars used in this application comprise a steel
bar having a generally rectangular or square cross section
with one edge of the shear bar acting as a cutting edge
against which the rotating knives cross in a scissors-like fashion. The cutting edge of the shear bar, which is generally uniform and straight, has a hardened surface or hard faced surface to reduce wear and thereby prolong the useful life of the shear bar cutting edge. Usually, shear bars have cutting edges on two opposite sides so that after one edge is worn the position of the shear bar may be reversed in the forage harvester to provide another sharp cutting edge.

Conventional shear bars have several drawbacks. As previously mentioned, as shear bars wear and become dull, increased power is required to cut the crop as it travels over the cutting edge of the shear bar. Additionally, as the rotating knives pass the crop moves transversely across the cutting edge of the shear bar resulting in increased horsepower requirements and disproportionate wear of both the knives and the shear bar.

Accordingly, it is one object of the present invention to provide a shear bar having an increased cutting edge length to prolong the useful life of the shear bar.

Another object of the invention is to provide a shear bar which restricts the transverse movement of a crop across the cutting edge of the shear bar.

A shear bar constructed in accordance with the present invention includes a metal bar such as steel having a cutting edge formed by cutting notches along the edge. The notches may be of various geometric configurations along the surfaces adjacent the cutting edge, such as triangles or semi-circles. The notches may be positioned along opposite edges of the shear bar to provide two cutting edges, so when one edge becomes worn, the position of the shear bar may be reversed in the forage harvester to provide another cutting edge without replacing the shear bar. Additionally, the cutting edge of a shear bar constructed in accordance with the present invention may be hardened or hard surfaced with tungsten-carbide or similar materials along the cutting edge to further prolong the useful life of the shear bar.

A more complete understanding of the present invention will become apparent from a reading of the entire disclosure with reference to the accompanying drawings in which:

Figure 1 is a cross-sectional view of a cylinder type forage harvester cutterhead and shear bar;

Figure 2 is a view along line 2-2 of Figure 1;

Figure 3 is a perspective view of a shear bar constructed in accordance with the present invention;

Figure 4 is a top view of the shear bar of Figure 3;

Figure 5 is a front elevational view of the shear bar of Figure 3;

Figure 6 is a perspective view of another embodiment of a shear bar constructed according to the principles of the present invention;

Figure 7 is a top view of the shear bar of Figure 6, and

Figure 8 is a front elevational view of the shear bar of Figure 6.

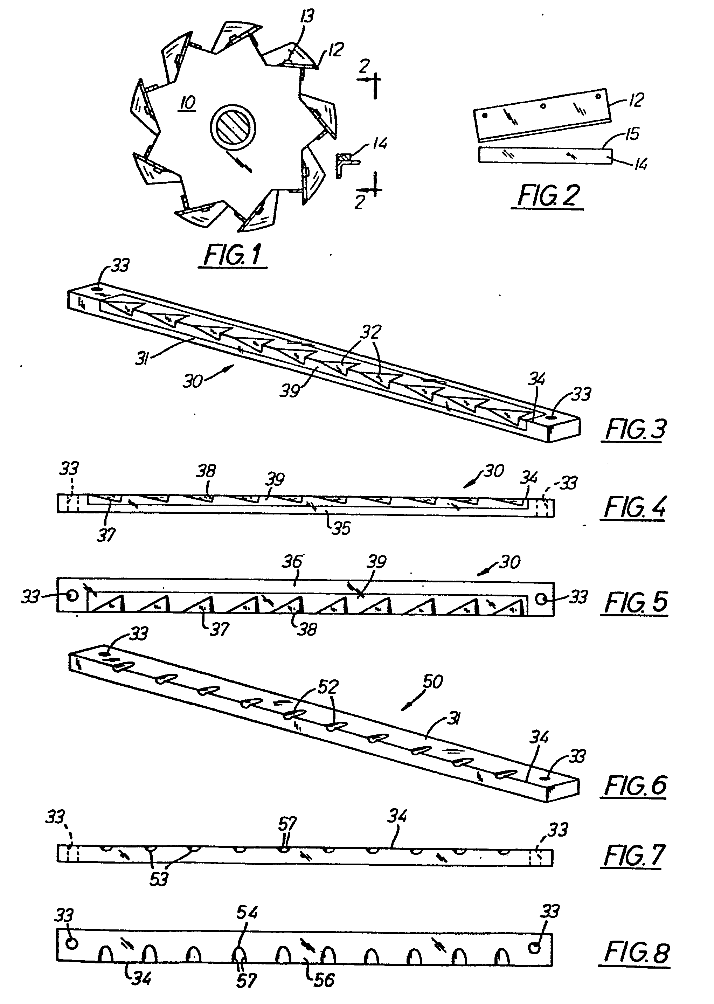

Referring to Figures 1 and 2, a cylinder type cutterhead 10 including a plurality of rotating knives 12 mounted thereon by bolts 13 or other fastening means is shown as it rotates causing the knives 12 to cross a stationary shear bar 14. The knives 12 are mounted at an angle to the edge of the shear bar 14 as shown in Figure 2 to create a scissors-like cutting action between the knives 12 and the shear bar 14 as a crop is fed over the top of the shear bar 14. The shear bar of the present invention may also be used with a flywheel type cutterhead.

In operation some of the crop will transversely move across the cutting edge 15 of the shear bar 14 due to the cutting action of the knife 12 and the shear bar 14.

One embodiment of a shear bar 30 constructed in accordance with the present invention is shown in Figures 3-5. The shear bar 30 comprises a metal bar 31 having a plurality of notches 32 along the cutting edge 34. The shear bar 30 also has mounting holes 33 for receiving bolts to securely fasten the shear bar 30. The notches 32 can be cut into the shear bar using well known manufacturing techniques.

In this embodiment, the notches 32 define triangles along the surfaces 35, 36 adjacent the cutting edge 34 as seen in Figures 4 and 5. Accordingly, the effective length of the cutting edge 34 is longer if notches 32 are present than if the cutting edge 34 was straight and had no notches

0022053

- 4 -

32. The increased length of the cutting edge 34 reduces the wear rate of the shear bar 30 thereby prolonging its useful life.

Additionally, the notches 32 are positioned along the cutting edge 34 of the shear bar 30 so that transverse movement of a crop along the cutting edge 34 is restricted. The shear bar 30 shown in Figures 3-5 has notches 32 positioned along the cutting edge 34 so that crop movement is from left to right in the drawing. As the crop enters the notches 32, movement is restricted by notched surface 38 to minimize the amount of a crop that is pushed away from the cutting action by movement of the rotating knives 12.

In accordance with current methods, hard surfacing 39 such as tungsten carbide may be placed along the cutting edge 34 of the shear bar 30 of the present invention to further increase the useful life of the shear bar cutting edge 34.

Referring now to Figures 6-8 in which like identifying numerals indicate like parts; an alternative shear bar 50 constructed in accordance with the present invention is shown comprising a metal bar 31 having mounting holes 33 for fastening the shear bar 50 to a forage harvester. The cutting edge 34 has notches 52 to increase the length of the cutting edge 34 and restrict transverse crop movement along the edge 34.

In this embodiment, the notches 52 can define semi-circles 53 or elongated semi-circles 54 as shown in Figure 8, respectively along the surfaces 55 and 56 adjacent the cutting edge 34 of the shear bar. As previously mentioned, the notches 52 provide an increased length along the cutting edge 34 to prolong the useful life of the shear bar 50. Transverse movement of the crop across the cutting edge 34 is restricted by the side surfaces 57 of the notches 52 thereby increasing the efficiency of the cut. While not shown in Figures 6-8, hard surfacing material 39 may be placed along the cutting edge 34 of shear bar 50 to increase the useful life of the shear bar cutting edge 34 as previously discussed.

While the present invention has been described with

- 5 -

reference to two particular embodiments thereof, it will be apparent to those skilled in the art that variations and alterations may be made without departing from the scope of the invention as defined by the following claims.

CLAIMS:

1. A shear bar for use in a forage harvester comprising a metal bar with at least one edge thereof denominated a cutting edge; characterized in that said cutting edge has a plurality of notches to increase the effective length of said cutting edge and restrict transverse movement of a crop along the length of said cutting edge when a crop is being cut.

2. A shear bar as defined in Claim 1 wherein said notches generally define a geometric shape along the surfaces adjacent said cutting edge.

3. A shear bar as defined in Claim 2 wherein said geometric shape is a triangle.

4. A shear bar as defined in Claim 2 wherein said geometric shape is a semicircle.

5. A shear bar as defined in any one of Claims 1 to 5 further comprising a hard surfacing material along said cutting edge.

6. A shear bar for use in a forage harvester comprising a steel bar of rectangular cross section with at least one edge thereof denominated a cutting edge; characterized in that said cutting edge has a plurality of notches defining a geometrical shape along the surfaces adjacent said cutting edge to increase the effective length of said cutting edge and prevent transverse movement of a crop along said cutting edge; and a hard surfacing material along said cutting edge to increase the wear resistance of said shear bar.

7. A shear bar as defined in Claim 6 wherein said geometric shape is a triangle.

8. A shear bar as defined in Claim 6 wherein said geometric shape is a semicircle.

9. A shear bar as defined in Claim 1 or 6 further comprising another edge thereof denominated a second cutting edge having a plurality of notches defining a geometric shape along the surfaces adjacent said second cutting edge to increase the effective length of said second cutting edge and restrict transverse movement of a crop along said second cutting edge when a crop is being cut with said second cutting edge.

FIG.1

FIG.2

FIG.3

FIG.4

FIG.5

FIG.6

FIG.7

FIG.8

## DOCUMENTS CONSIDERED TO BE RELEVANT

| Category | Citation of document with indication, where appropriate, of relevant passages | Relevant to claim |
|---|---|---|
| X | <u>DE - A - 2 137 544</u> (HENCH) <br> * Page 3, line 30 - page 5, line 2 * | 1,2,4, 8 |
| X | <u>FR - A - 2 408 994</u> (SPERRY RAND) <br> * Page 3, line 1 - page 6, line 6 * | 1-4,6-9 |
| | <u>US - A - 1 973 169</u> (IELFIELD) <br> * Page 2, lines 99-125 * | 1-3,7 |
| | <u>DE - A - 2 057 364</u> (BOTSCH) <br> * Page 6; figures 2-5 * | 1-3,7 |
| | <u>US - A - 3 035 393</u> (MATHEWS) <br> * Column 7, lines 20-75; figures 8,9 * | 1 |
| | <u>FR - A - 2 213 730</u> (GEHL) <br> * Page 3, line 2 - page 4, line 27 * | 5 |
| | <u>FR - A - 2 104 410</u> (DEERE) <br> * Page 5, line 9 - page 6, line 21 * | 5 |

**CLASSIFICATION OF THE APPLICATION (Int. Cl. 3)**

A 01 D 43/08
A 01 F 29/06

**TECHNICAL FIELDS SEARCHED (Int.Cl. 3)**

A 01 D
A 01 F
B 02 C

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-09-1980 | DE LAMEILLEURE |